# EUROPEAN PATENT SPECIFICATION

(11) **EP 2 371 227 B1**
(45) Date of publication and mention of the grant of the patent: **09.09.2015**
(21) Application number: 10157363.2
(22) Date of filing: 23.03.2010
(51) Int. Cl.: A23L 1/16, A23L 1/212, A23L 1/216

(54) **Pasta product including potato material**
Kartoffeln enthaltendes Nudelprodukt
Produit de pâtes contenant de la pomme de terre

(43) Date of publication of application: 05.10.2011
(73) Proprietor: Birds Eye IPCO Limited, Feltham, Middlesex TW14 8HA (GB)
(72) Inventor: Europeo, Luca Mario, 3071 JL Rotterdam (NL)
(74) Representative: Finnie, Peter John

(56) References cited:
- EP-A1- 0 096 305
- WO-A1-2004/004486
- US-A- 4 563 358

## Description

### Background of the invention

Pasta products are well-known and available in an seemingly endless amount of varieties, like long ropes, (spaghetti), flat ropes (tagliatelle), tubes (penne), or more artistic shapes representing e.g. a figure. An additional variety is the filled pasta's like e.g. ravioli and tortellini, comprising an envelope of pasta dough and a filling that may comprise for example meat, fish and/or vegetables. The various appearances not only have an aesthetic function. In for example Italian cooking specifically shaped types of pasta are combined with specific types of sauce because of a desired interaction of the sauce with the pasta of a specific shape. The interaction between the sauce and the pasta product is an appreciated culinary parameter. A special type of pasta with a shape having both an aesthetic and practical function is known from WO2004/004486, US 4,563,358 or EP 96 305. The pasta described in WO2004/004486 has the shape of a network and may form an envelope with a filling. This net-shape allows a rapid cooking time of the pasta. In addition, it provides the advantage that the filling is cooked more directly compared to traditionally enveloped pasta's, wherein the risk is present that the filling is not completely cooked, whereas the surrounding and protecting envelop is already done. A traditional advantage of wheat-based pasta is that it comprises gluten, which provides both an elastic, rigid and stickening character to the dough. This supports manufacture of wheat-based pasta in all various shapes, among which the net-shape comprising interknitted filaments as described in WO/2004/004486.

Besides the well known pasta's prepared form a dough comprising wheat flour and water, pasta's or pasta-resembling products are known which are based on dough comprising potato material. An example of such potato-based pasta's are gnocchi, having the shape of little dough lumps, which is a popular variant in for example Italy.

Recently, the culinary desire was recognized to provide a pasta, which provides the aesthetic and practical advantages of a net-shaped wheat-based pasta, but at the other hand, provides the culinary variation of the taste, mouthfeel and pasta-sauce interaction provided by potato material. This is in particularly of interest for consumers with an allergy against some forms of wheat comprising gluten (e.g. coeliaky).

Known varieties of potato-based pasta are prepared from potato flour. Alternative forms of potato sources for known potato-based pasta are (freeze) dried potato flakes or powder, or frozen potato pellets. It appeared, however, that when a net-shaped pasta envelop was prepared using these type of potato ingredients, the texture of the pasta net was of very poor quality, did not form at all, or was that weak that it collapsed under its own weight, especially when a filling was present in the net-shaped envelope prepared from the potato-based dough.

### Summary of the invention

Hence, the aim of the present invention is to provide a pasta which comprises, at least partly, an envelope with a net-structure, wherein the dough comprises potato material. The dough used to prepare this pasta product should be sufficiently sticky and elastic to allow interknitting of the individual filaments that form the net and to keep the filaments stuck together in the net-structure during production, packaging and during heating by the consumer. This becomes particularly relevant when the pasta comprises a filling.

Surprisingly, this aim has been reached by a process to prepare a pasta product, comprising a net-structure of pasta, the process comprising the steps of:
a) preparing a dough comprising (wt% based on the weight of the dough):
   - from 20 wt% to 60 wt% of a starch source,
   - from 40 wt% to 80 wt% of fresh cooked and comminuted potato material,
b) shaping the dough resulting from step a) into a net-structure,
c) Subjecting the product resulting from step b) to a treatment selected from the group consisting of frying and applying oil to the resulting product, to obtain a pasta product comprising a net-structure of pasta.

In a further aspect the present invention relates to a pasta product comprising a net-structure of pasta, obtainable by the process according to the invention.

In a further aspect the present invention relates to a pasta product comprising a net-structure of pasta, which pasta product comprises, based on the weight of the net-structure of pasta, from 10 wt% to 100 wt% of potato material.

In a further aspect, the invention relates to the use of a pasta product comprising a net-structure of pasta, for preparing a ready-to-eat meal.

### Detailed description of the invention

### Definitions

The term "pasta", or "pasta product" should be understood here in its conventional meaning of a starch-rich staple good prepared from a dough to be cooked or steamed in order to result in a ready to eat meal. Examples of traditional varieties of pasta are for example macaroni, spaghetti, tagliatelle, lasagna, tortellini etc. In the present context, the term "pasta" is not reserved for products traditionally based on wheat flour. The product of the present invention, although based on potato material, is indicated here as a pasta product.

In the context of the present invention, the "fresh cooked and comminuted potato material", should not be considered as a "starch source". The term "starch source" is intended to mean here a source of starch which is added and present in addition to "fresh cooked and comminuted potato material".

In the present invention, the term "fresh cooked and comminuted potato material" is intended to mean potato material which has been provided preferably by cooking potatoes and comminuting them. The "fresh cooked and comminuted potato material" is intended to mean that the potato material has not been processed by drying, freezing or freeze drying. Drying or freezing or freeze drying may affect the quality of the net-structure according to the present invention. The potato material, either at the stage that it was raw potato tuber, cooked potato, or comminuted cooked potato, from which the "fresh cooked and comminuted potato material" has been prepared did not undergo a freezing step nor a drying step.

The term "net-structure" or "net-shape" is intended to mean having the appearance like a net, a web, or a raster.

All percentages are weight/weight percentages of the total composition unless otherwise indicated. Where the term "comprising" is used in the specification or claims, it is not intended to exclude any terms, steps or features not specifically recited.

### Step a)

### Starch source

The present invention relates to a process to prepare a pasta product. In step a) of the process according to the invention a dough is prepared comprising a starch source and fresh potato material. It was found that the texture of the dough was not optimal when the pasta dough was prepared solely with conventional potato ingredients like potato flour or freeze dried potato pellets. Surprisingly, by the process of the present invention, a pasta-net could be prepared which showed sufficient stickening, elasticity, and texture strength to provide a net-structure, which allowed preparing an envelop structure which could contain a filling. To this end, the pasta dough comprises from 20 wt% to 60 wt% of a starch source (wt% based on the weight of the dough). Preferably, the starch source is present in a total amount of from 30wt% to 55wt%, more preferably of from 40wt% to 50wt% (based on the weight of the dough). The starch source may be any starch source used in the food industry and is preferably selected from of the group of starch sources consisting of wheat flour, potato flour, corn flour, frozen potato, rice starch and mixtures thereof. More preferably, the invention relates to a process to prepare a pasta product wherein the starch source is selected from the group consisting of potato flour, frozen potato and mixtures thereof, most preferably, the starch source is potato flour. Frozen potato is intended to mean mashed potato that has been frozen. Preferably, potato flour and/or frozen potato is present in a total amount of from 20 to 60wt%, more preferably of from 30wt% to 55wt%, most preferably of from 40wt% to 50wt% (based on the weight of the dough).

### Fresh cooked and comminuted potato material

According to the invention, the dough in step a) of the process to prepare a pasta product comprises from 40 to 80 wt% of fresh cooked and comminuted potato material (wt% based on the weight of the dough). Preferably, the dough comprises fresh cooked and comminuted potato material in an amount of between 45wt% and 70wt%, most preferably of between 50wt% and 65wt%, based on the weight of the dough.

Fresh cooked and comminuted potato material is preferably provided by cooking potatoes and comminuting them. Preferably, the potato tubers are washed and peeled before cooking them. It may be preferred to blanch the potatoes in hot or boiling water before they are cooked. The blanching time may depend on the potato species and the size of the potatoes and is preferably for a period of between 20 and 90 seconds, more preferably for a period of between 30 and 40 seconds,. Blanching is preferably conducted in steam or in water, the temperature of which is preferably between 70 and 160°C, preferably of between 80 and 100°C. The blanching effect may depend both on temperature and timing. To achieve the desired blanching conditions, blanching may preferably be conducted under a pressure which may preferably be of between 1 and 9 bar, more preferably of between 3 and 8 bar. The blanching step may de-activate enzymes in the potato material. The potatoes are preferably cooked for a period of between 10 and 20 minutes, more preferably for a period of between 12 and 18 minutes. Cooking is preferably carried out in boiling water. Omitting of the cooking step in the preparation of the fresh cooked and comminuted potato material tends to affect the strength of the resulting pasta net-structure and affect the possibility to maintain the net shape of the pasta product. Comminuting of the potato material is preferably carried out by mashing, rasping or pulping. Hence, preferably, the fresh cooked and comminuted potato material comprises potato material selected from the group consisting of mashed potato, rasped potato, pulped potato and mixtures thereof. Preferably, the fresh cooked and comminuted potato material mainly comprises mashed potato.
The water content of fresh cooked and comminuted potato material is preferably between 73% and 81 %, more preferably between 75% and 79%.

### Further ingredients

The amount of wheat flour in the dough to prepare the present pasta product is preferably as low as possible, most preferably wheat flour is substantially absent. Hence, preferably, the amount of wheat flour in the dough of the present pasta product is lower than 10wt%, more preferably lower than 5 wt%, even more preferably lower than 3wt%, most preferably lower than 1 wt% of wheat flour, and can preferably be between 0 wt% and 5 wt%, which includes the absence of any wheat flour, more preferably of from 0.1 to 3 wt%, based on the weight of the dough.

The amount of gluten in the pasta product is preferably as low as possible. Preferably the pasta product is substantially free from gluten. Hence, preferably, gluten are present in an amount of lower than 1 wt%, more preferably lower than 0.1 wt% and can be from 0 to 1 wt%, more preferably of from 0.1 to 0.5 wt%, based on the weight of the dough.

### Step b

In step b) of the process of the present invention, the dough resulting from step a) is shaped into a net-structure. The net-structure can be shaped by processes known in the art of food processing. The net-structure is preferably provided by a process of weaving or knitting of the filamentous elements forming the net structure. This technique results in an interwoven, interconnected or interlocked structure. The technique and machinery to prepare a net-structure is known to the person skilled in the art, and can for example be found in WO2004/004486.

The net structure preferably comprises at least 2, preferably at least 4 most preferably at least 8 and preferably less than 25, more preferably less than 20, most preferably less than 16 parallel filamentous pasta elements under an angle of from 5 to 90 degrees to preferably at least 2, more preferably at least 4, most preferably at least 8 and preferably less than 25, more preferably less than 20, most preferably less than 16 other parallel filamentous pasta elements.

Preferably, the net-structure comprises filamentous elements, wherein the filamentous elements have a width of at least 0.2 mm and less then 1 cm. more preferably of between 0.5 mm and 0.8 cm. This width provides optimal textural integrity and strength to the pasta net. The length of the filamentous elements in the resulting pasta product comprising a net structure of pasta is preferably from at least 2 mm and less then 20 cm, more preferably from at least 1 cm and less than 15 cm, most preferably from at least 5 cm and less than 10 cm. Preferably, the net structure has a regular pattern. "Regular" is intended to mean for example that the filaments in one direction are parallel to each other and filaments arranged under an angle of the first mentioned filaments are also arranged parallel to each other.

The net structure can be seen as a combination of open space divided by the surface area of the network material (the pasta). The ratio network material : open space per square unit is preferably between 10:1 and 5:1, more preferably of from 1:6 to 3:1, in the resulting pasta product comprising a net-structure of pasta.

Preferably, after or simultaneously with step b), the dough with a net structure resulting from step b) is combined with a filling. The filling can be added to the dough with a net-structure for example by wrapping the dough with the net-structure around the filling, in this way creating an envelope comprising a net structure around the filling.

Alternatively, in a preferred aspect, the filling is combined with the dough with the net-structure using co-extrusion. Hence, preferably, the process of the present invention further comprises a step of combining the dough with a net-structure resulting from step b) with a filling. This step is conducted before frying step c) and after step b), or simultaneously with step b). This combining of dough with a net-structure resulting from step b) with a filling preferably comprises enveloping the filling with the dough with a net structure resulting from step b). Preferably, the process comprises the step of enveloping a filling with the dough with a net structure.

Preferably, the step b) "shaping the dough resulting from step a) into a net-structure" and the step of "combining the dough with a net structure resulting from step b) with a filling" are conducted simultaneously, preferably this combining and/or enveloping comprises co-extruding the dough and the filling. By co-extruding the dough and the filling, an envelope which comprises the dough shaped into a net structure, which comprises a filling is prepared.

Preferably, the weight of the filling is between 30 wt% and 70 wt%, preferably of between 40 wt% and 60 wt%, most preferably of between 45 wt% and 55wt%, based on the weight of the total pasta product including the filling.

### Step c

After the shaping of the dough into a net structure, preferably followed by combining the dough with a filling, the dough, preferably containing a filling, is subjected to a treatment selected from the group consisting of frying and applying oil to the resulting product. In step c), "the resulting product" may refer to a dough with a net structure. It preferably refers to "dough with a net structure combined with a filling", preferably to "dough with a net structure containing a filling". Frying is preferably conducted in oil. It is in the art of the skilled person to choose a suitable oil to fry the pasta dough. Frying is preferably carried out at a temperature of between 175°C and 220°C, more preferably of between 179°C and 190°C. Frying is preferably carried out for a period of between 30 and 50 seconds, more preferably of between 35 and 45 seconds, most preferably of between 38 and 42 seconds. The advantage of applying a frying step is that the consumer only needs to heat the product at home. When oil is applied to the resulting product, oil is preferably applied by spraying oil on the product, or by immersing the product resulting from step b) in oil. Spraying of the oil is most preferred. Oil is applied preferably in an amount of from 0.5 to 5wt%, more preferably from 1 to 3wt%, based on the total weight of the resulting pasta product. Applying oil in step c) may be preferred for a product which needs to be fried at home by the consumer, and not only heated. Preferred oils may be for example sunflower oil, olive oil, rape seed oil or palm oil.

The process of the present invention may result in various types of pasta products, like for example chilled pasta or frozen pasta. Depending on the desired variety, the process of the present invention may further preferably comprise a chilling step or a freezing step. This step is conducted after the step c). Hence, preferably, the present invention relates to a process further comprising the step of subjecting the pasta product comprising a net structure of pasta to one of the procedures selected from the group consisting of chilling, freezing and mixtures thereof. Chilling may be conducted to a temperature of between 0°C and 10°C, preferably of between 4°C and 7°C. Freezing may be conducted to a temperature of between -30°C and -1°C, preferable of between -25°C and -10°C , most preferably of between -20°C and -15°C. These procedures can be done in a conventional way and it is in the art of the skilled person to conduct a chilling or freezing step with the product resulting from the process of the invention.

The process of the present invention may preferably comprise a step of packaging the pasta product resulting from the process of the present invention.

The present invention further relates to a pasta product comprising a net-structure of pasta as claimed.

More preferably, the pasta product according to the invention comprises more than 30wt%, even more preferably more than 50 wt%, most preferably more than 80wt% of potato material and can comprise for example from 10wt to 100wt% of potato material, from 30wt% to 99wt%, from 50wt% to 85wt% or from 60wt% to 80wt% of potato material. Most preferably, the pasta product consists essentially of potato material. The indicated amount of potato material should be construed as the potato material which is present in the net-structure of the pasta product and not in for example a possible filling.

Preferably, the present invention further relates to a pasta product, comprising a net-structure of pasta according to the present invention, which pasta product comprises, based on the weight of the net structure,
- from 20 wt% to 60 wt% of a starch source
- from 40 wt% to 80 wt% of fresh cooked and comminuted potato material.

The preferred characteristics of the pasta product have been described above when the process of the invention has been described. Where in the description of the process according to the invention has been referred to amounts of for example a starch source or fresh cooked and comminuted potato material, as based on the weight of the dough prepared in step a) of the process of the present invention, these amounts equally apply to the pasta product of the present invention and can be read as preferred characteristics or ingredients of the pasta product as well. The processing steps appeared not or hardly to influence the relative amounts of ingredients. The preferred amounts then should be read as based on the weight of the net structure of the pasta product, as the "dough" may not be recognized as such in the resulting pasta product.

Preferably, the pasta product of the present invention has the shape of an envelope. Envelope should be understood here as a functional description, i.e. as a structure comprising one single or two layers of dough, which can surround a filling. The shape is not limited to any particular shape. Preferably the shape is a shape that allows the envelope to contain a filling. The shape may be square, round, oval, but also the shape of a diamond, flower, pillow etc. can be desired. In the present context, the envelope comprises the pasta dough with a net structure.

The pasta product according to the invention is preferably a frozen pasta product or a chilled pasta product. In this situation, the pasta may be frozen or chilled after it has been fried.

Preferably, the present invention relates to a pasta product wherein the pasta product comprises a filling. Especially in case the pasta product of the present invention is a chilled pasta product or a frozen pasta product, the pasta product of the present invention may comprise a filling. Due to the specific composition and amounts of potato ingredients, the pasta product comprising a net structure of pasta according to the present invention is specifically suited to contain a filling. The weight of the filling is preferably between 30 and 70 wt%, based on the weight of the total pasta product. The filling preferably comprises at least one filling selected from the group consisting of fish, meat, cheese, egg, starch, vegetable matter, flavours, herbs, spices, bread crumbs, potato granules, fat, vegetable fibres, bouillon concentrate, soup concentrate and mixtures thereof. Preferably, the filling is present in an envelope of pasta dough comprising a net structure. The filling may be combined with an envelope by wrapping the envelop around the filling material. Preferably, however, the filling is combined with the envelope material by extrusion or more preferably co-extrusion of the envelope material and the filling, as has been described above.

Depending on the type of pasta product, the water content may vary. At the moment of packaging the product or at the moment of sale of the product to the consumer, the pasta product of the invention, including a possible filling, comprises preferably from 15 to 80 wt%, preferably from 30 to 70 wt% of water, in case the pasta product is sold as a fresh, chilled pasta (based on the weight of the pasta product including the filling).

The present invention relates further to a process to prepare a ready-to-eat food product comprising a pasta product comprising a net-structure of pasta, which process comprises the step of heating a pasta product according to the invention. Heating is preferably conducted by one of the group consisting of, steam, oven, microwave, pan or mixtures thereof. Hence, the invention relates to the use of a pasta product comprising a net-structure of pasta according to the present invention, for preparing a ready-to-eat food product. A ready-to-eat food product may be in the present context a food product which is done and a consumer can consume directly. It may be pasta as such, a pasta with a sauce or a combination of pasta with other food components, like meat, fish, vegetables etcetera.

The present invention is exemplified by the following non-limiting examples (1-13).

### Examples:

### Example 1:

A potato pasta product was prepared (step a) by preparing a dough comprising 25 % of potato powder, 42% of frozen potatoes, variety Agria, resulting from a blanching/freezing process in the factory, 15% of wheat flour, 3% of gluten, 1% of salt, and 13% of added water. The ingredients were mixed together to result in a dough.
The resulting dough was then shaped using an apparatus of Sela resulting in a web with a diameter of 3.3mm.
A filling of vegetables was added manually, and represented 50% of the total weight. The pasta product with a net-structure of pasta, containing a vegetable filling was fried in oil at 180°C during 40 seconds.
The product was then frozen at a temperature of -18°C, and reheated in an oven of 200°C during 10 minutes to mimic the consumer behaviour.

The texture of the pasta product was analyzed by a panel of 4 people on a scale of 1-5 and has been indicated in table 1.

### Example 2 to 13:

Preparation of the dough, shaping, addition of filling, frying, freezing, reheating and analysis was done similar as described for Example 1. The dough was prepared using the ingredients summarized in Table 1. The fresh cooked and comminuted potatoes were prepared by cleaning them, followed by blanching for 60 to 80 seconds at a pressure of 7.5 bar, cleaning them again, and cooking for 12 to 18 minutes at 140°C. After cooking the potatoes were mashed.

The pasta of examples 10, 12 and 13 showed a good texture, which was comparable with the texture of conventional wheat-based pasta. Example 11 showed a texture with less preferred rigidity, but a coherent texture was obtained.

### Example 14 to 16:

A pasta product was prepared by preparing a dough comprising 29% of potato flour and 68 %wt of mashed potato material as described for example 1. The dough was shaped to a net shape with filaments having a diameter of 6 mm, using an extrusion machine of the type of Sela. A filling was included in the dough manually. Sunflower oil was applied to the resulting dough in an amount of 0 (C.E. 14), 3 (C.E. 15) and 10wt% (C.E. 16) by spraying the oil to the product. The resulting product was frozen at 18°C.
To mimic consumer behaviour, the products comprising 0wt% ,3wt% an 10wt% of oil were fried in sunflower oil. In a panel test comprising 4 members, the product comprising 3wt% (C.E. 15) showed a structure rated as 4 (see legend of table). The product on which 0wt% of oil was applied (C.E. 14) lost its texture and showed a texture of 1. The product on which 10wt% of oil was applied (C.E. 16) showed a texture of 2. It had a fatty and unappealing appearance.

| **Example/ingredient** | **1(C.E.)** | **2(C.E.)** | **3(C.E.)** | **4(C.E.)** | **5(C.E.)** | **6(C.E.)** | **7(C.E.)** | **8(C.E.)** |
|---|---|---|---|---|---|---|---|---|
| **Mashed potato** | | | | | | | | |
| **Potato powder** | 25 | 25 | 25 | 25 | 39 | 37 | 37 | 37 |
| **Potato flakes** | | | | | | | | |
| **Pot. pellets frozen** | 42 | 42 | 42 | 48 | 36 | 35 | 35 | 29 |
| **Potato type pellet/fresh** | A | B | B | A | A | A | P | P |
| **Wheat flour** | 15 | 15 | 15 | 15 | 14 | 14 | 13 | 6 |
| **Rice starch** | | | | | | 5 | 5 | 4 |
| **mashed/processed potato** | | | | | | | | |
| **Gluten** | 3 | 3 | 2 | 3 | 2 | 2 | 2 | |
| **Salt** | 1 | 1 | 1 | 1 | 2 | 2 | 2 | 2 |
| **Added water** | 13 | 12 | 12 | 13 | 7 | 7 | 7 | 21 |
| **Result 1-5** | 1 | 1 | 1 | 1 | 1 | 1 | 1 | 1 |
| | | | | | | | | |

| **Example/ingredient** | | **10** | **11** | **12** | **13** | **14(C.E.)** | **15** | **16(C.E.)** |
|---|---|---|---|---|---|---|---|---|
| **Mashed potato** | | 49 | 78 | 68 | 59 | 68 | 68 | 68 |
| **Potato powder** | | | | | | | | |
| **Potato flakes** | | 49 | 20 | 29 | 39 | 29 | 29 | 29 |
| **Pot. pellets frozen** | | | | | | | | |
| **Potato type pellet/fresh** | | A | A | A | A | B | B | B |
| **Wheat flour** | | | | | | | | |
| **Rice starch** | | | | | | | | |
| **mashed/processed potato** | | 50:50 | 80:20 | 70:30 | 60:40 | 70:30 | 70:30 | 70:30 |
| **Gluten** | | | | | | | | |
| **Salt** | | 2 | 2 | 2 | 2 | 2 | 2 | 2 |
| **Added water** | | | | | | | | |
| **Result 1-5** | | 4 | 2 | 3 | 5 | 1 | 4 | 2 |

| | | | | | | | | |
|---|---|---|---|---|---|---|---|---|
| Examples 1-16 Examples 1-8 and 14 and 16 are comparative examples "mashed potato" = cooked and comminuted fresh potato material 5 Very good texture Crunchy on the outside, soft at the inside 4 Good texture Crunchy to soft on the outside, soft at the inside 3 Acceptable texture Crunchy to soft on the outside Soft to a bit hard inside 2 poor texture Very hard outside or very soft outside 1 very poor to no texture irregular net structure, no bite, very hard or very soft, unpleasant in the mouth, not able to keep a filling inside C E Comparative Example A Agra B Bintje P Ploegmakers | | | | | | | | |

## Claims

1. A process to prepare a pasta product, comprising a net-structure of pasta, the process comprising the steps of:
a) preparing a dough comprising (wt% based on the weight of the dough):
- from 20 wt% to 60 wt% of a starch source,
- from 40 wt% to 80 wt% fresh cooked and comminuted potato material,
b) shaping the dough resulting from step a) into a net-structure,
c) subjecting the product resulting from step b) to a treatment selected from the group consisting of frying and applying oil to the resulting product, to obtain a pasta product comprising a net-structure of pasta.

2. Process according to claim 1, further comprising the step of combining the dough with a net structure resulting from step b) with a filling.

3. Process according to claim 2, wherein the step of combining the dough with a net structure resulting from step b) with a filling preferably comprises enveloping the filling with the dough with a net structure resulting from step b).

4. Process according to claim 2 or 3 wherein step b) and the step of combining the dough with a net structure resulting from step b) with a filling are conducted simultaneously.

5. Process according to any one of claims 2 to 4, wherein the weight of the filling is between 30 and 70 wt%, based on the weight of the total pasta product including the filling.

6. Process according to any one of the preceding claims, further comprising the step of subjecting the pasta product comprising a net structure of pasta to one of the procedures selected from the group consisting of chilling, freezing, and mixtures thereof.

7. Process according to any one of the preceding claims, wherein the starch source is selected from the group of starch sources consisting of wheat flour, potato flour, frozen potato, rice starch and mixtures thereof.

8. Process according to any one of the preceding claims, wherein fresh cooked and comminuted potato material comprises potato material selected from the group consisting of mashed potato, rasped potato, pulped potato and mixtures thereof.

9. A pasta product, comprising:
a net-structure of pasta;
oil applied to the product,
which pasta product comprises, based on the weight of the net-structure of pasta,
a dough comprising:
- from 20 wt% to 60 wt% of a starch source, and
- from 40wt% to 80wt% of fresh cooked and comminuted potato material.

10. Pasta product according to claim 9, wherein the pasta product comprises a filling.

11. Pasta product according to claim 9 or 10, wherein the pasta product is a frozen pasta product.

12. Process to prepare a ready-to-eat food product comprising a pasta product comprising a net-structure of pasta, which process comprises the step of heating a pasta product according to any one of the claims 9 to 11.

13. Use of a pasta product according to any one of claims 9 to 12, for preparing a ready-to-eat food product.

## Patentansprüche

1. Verfahren zum Zubereiten eines Nudelprodukts, das eine Nudel-Netzstruktur umfasst, wobei das Verfahren die folgenden Schritte umfasst:
a) Zubereiten eines Teigs, umfassend (Gew.-% auf Basis des Gewichts des Teigs):
- von 20 Gew.-% bis 60 Gew.-% einer Stärkequelle,
- von 40 Gew.-% bis 80 Gew.-% frisch gekochtes und fein zerkleinertes Kartoffelmaterial,
b) Formen des aus Schritt a) resultierenden Teigs zu einer Netzstruktur,
c) Unterziehen des aus Schritt b) resultierenden Produkts einer Behandlung, die aus der Gruppe bestehend aus Frittieren der und Anwenden von Öl auf das resultierende Produkt ausgewählt ist, um ein Nudelprodukt zu erhalten, das eine Nudel-Netzstruktur umfasst.

2. Verfahren nach Anspruch 1, das ferner den Schritt des Kombinierens des aus Schritt b) resultierenden Teigs mit einer Netzstruktur mit einer Füllung aufweist.

3. Verfahren nach Anspruch 2, wobei der Schritt des Kombinierens des aus Schritt b) resultierenden Teigs mit einer Netzstruktur mit einer Füllung vorzugsweise das Umhüllen der Füllung mit dem aus Schritt b) resultierenden Teig mit einer Netzstruktur umfasst.

4. Verfahren nach Anspruch 2 oder 3, wobei Schritt b) und der Schritt des Kombinierens des aus Schritt b) resultierenden Teigs mit einer Netzstruktur mit einer Füllung gleichzeitig durchgeführt werden.

5. Verfahren nach einem der Schritte 2 bis 4, wobei das Gewicht der Füllung zwischen 30 und 70 Gew.-% auf der Basis des Gewichts der gesamten Nudelprodukts einschließlich der Füllung ist.

6. Verfahren nach einem der vorhergehenden Ansprüche, das ferner den Schritt des Unterziehens des Nudelprodukts, das eine Nudel-Netzstruktur umfasst, einem Verfahren, das aus der Gruppe bestehend aus Kühlen, Gefrieren und Mischungen davon ausgewählt ist.

7. Verfahren nach einem der vorhergehenden Ansprüche, wobei die Stärkequelle aus der Gruppe von Stärkequellen bestehend aus Weizenmehl, Kartoffelmehl, gefrorenen Kartoffeln, Reisstärke und Mischungen davon ausgewählt ist.

8. Verfahren nach einem der vorhergehenden Ansprüche, wobei das frisch gekochte und fein zerkleinerte Kartoffelmaterial aus der Gruppe bestehend aus gestampften Kartoffeln, geriebenen Kartoffeln, Kartoffelbrei und Mischungen davon ausgewählt ist.

9. Nudelprodukt, umfassend:
eine Nudel-Netzstruktur,
auf das Produkt angewendetes Öl,
wobei das Nudelprodukt auf Basis des Gewichts der Nudelnetzstruktur umfasst:
einen Teig, umfassend:
- von 20 Gew.-% bis 60 Gew.-% einer Stärkequelle und
- von 40 Gew.-% bis 80 Gew.-% frisch gekochtes und fein zerkleinertes Kartoffelmaterial.

10. Nudelprodukt nach Anspruch 9, wobei das Nudelprodukt eine Füllung aufweist.

11. Nudelprodukt nach Anspruch 9 oder 10, wobei das Nudelprodukt ein gefrorenes Nudelprodukt ist.

12. Verfahren zum Zubereiten eines verzehrfertigen Nahrungsmittelprodukts, umfassend ein Nudelprodukt, das eine Nudel-Netzstruktur umfasst, wobei das Verfahren den Schritt des Erhitzens eines Nudelprodukts nach einem der Ansprüche 9 bis 11 umfasst.

13. Verwendung eines Nudelprodukts nach einem der Ansprüche 9 bis 12 zur Zubereitung eines verzehrfertigen Nahrungsmittelprodukts.

## Revendications

1. Processus de préparation d'un produit de pâtes, comprenant une structure de matrice de pâtes, le processus comprenant les étapes consistant à :
a) préparer une pâte contenant (en % en poids relativement au poids de la pâte) :
- de 20% en poids à 60% en poids d'une source d'amidon,
- de 40 % en poids à 80% en poids d'une substance de pommes de terre fraîchement cuite et broyée,
b) mettre en forme la pâte résultant de l'étape a) en une structure de matrice,
c) soumettre le produit résultant de l'étape b) à un traitement sélectionné dans le groupe consistant en friture et application d'huile sur le produit résultant, afin d'obtenir un produit de pâtes comprenant une structure de matrice de pâtes.

2. Processus selon la revendication 1, comprenant en outre l'étape de combinaison de la pâte à structure de matrice résultant de l'étape b) avec une farce.

3. Processus selon la revendication 2, dans lequel l'étape de combinaison de la pâte à structure de matrice résultant de l'étape b) avec une farce comprend de préférence l'enveloppement de la farce avec la pâte à structure de matrice résultant de l'étape b).

4. Processus selon la revendication 2 ou 3, dans lequel l'étape b) et l'étape de combinaison de la pâte à une structure de matrice résultant de l'étape b) avec une farce sont effectuées simultanément.

5. Processus selon l'une quelconque des revendications 2 à 4, dans lequel le poids de la farce est entre 30 et 70% en poids, relativement au poids du produit de pâtes total, farce comprise.

6. Processus selon l'une quelconque des revendications précédentes, comprenant en outre l'étape de soumission du produit de pâtes comprenant une structure de matrice de pâtes à l'une des procédures sélectionnées dans le groupe consistant en réfrigération, congélation et des mélanges de celles-ci.

7. Processus selon l'une quelconque des revendications précédentes, dans lequel la source d'amidon est sélectionnée dans le groupe de sources d'amidon consistant en farine de blé, farine de pomme de terre, pomme de terre congelée, amidon de riz et des mélanges de ceux-ci.

8. Processus selon l'une quelconque des revendications précédentes, dans lequel une substance de pommes de terre fraîchement cuite et broyée comprend une substance de pommes de terre sélectionnée dans le groupe consistant en purée de pommes de terre, râpure de pommes de terre, pulpe de pommes de terre et des mélanges de celles-ci.

9. Produit de pâtes, comprenant :
une structure de matrice de pâtes ;
de l'huile appliquée sur le produit,
lequel produit de pâtes comprend, relativement au poids de la structure de matrice de pâtes,
une pâte contenant :
- de 20% en poids à 60% en poids d'une source d'amidon, et
- de 40 % en poids à 80% en poids d'une substance de pommes de terre fraîchement cuite et broyée.

10. Produit de pâtes selon la revendication 9, dans lequel le produit de pâtes comprend une farce.

11. Produit de pâtes selon la revendication 9 ou 10, dans lequel le produit de pâtes est une produit de pâtes congelé.

12. Processus de préparation d'un produit alimentaire prêt à manger comprenant un produit de pâtes à structure de matrice de pâtes, lequel processus comprend l'étape de chauffage d'un produit de pâtes selon l'une quelconque des revendications 9 à 11.

13. Utilisation d'un produit de pâte selon l'une quelconque des revendications 9 à 12, pour préparer un produit alimentaire prêt à manger.
